Europäisches Patentamt

European Patent Office

Office européen des brevets

(11) Numéro de publication: **0 181 816**
**A1**

(12) # DEMANDE DE BREVET EUROPEEN

(21) Numéro de dépôt: 85402124.3

(22) Date de dépôt: 05.11.85

(51) Int. Cl.⁴: **G06F 9/44**

(30) Priorité: 09.11.84 FR 8417104

(43) Date de publication de la demande:
**21.05.86 Bulletin 86/21**

(84) Etats contractants désignés:
DE FR GB

(71) Demandeur: **PALAIS DE LA DECOUVERTE**
**Avenue Franklin D. Roosevelt**
**F-75008 Paris(FR)**

(72) Inventeur: **Rouchon, René Claude**
**32, rue Francois Miron**
**F-75004 Paris(FR)**

(74) Mandataire: **Mongrédien, André et al**
**c/o SOCIETE DE PROTECTION DES INVENTIONS**
**25, rue de Ponthieu**
**F-75008 Paris(FR)**

(54) **Dispositif de simulation et de sécurité pour clavier de saisie de données.**

(57) L'invention concerne un dispositif de simulation et de sécurité pour clavier de saisie de données d'un processeur.

Ce dispositif comprend un ensemble de mémorisation (9) contenant des instructions codées d'appel d'un programme d'exécution, relié à l'unité d'entrée-sortie (2) du processeur (1). et un ensemble d'aiguillage (10) relié à l'ensemble de mémorisation (9), aux colonnes (4) du clavier et à l'unité d'entrée-sortie (2) pour permettre la transmission des instructions d'appel vers le processeur (1), pour empêcher toute transmission d'instructions codées à partir du clavier (5) pendant l'initialisation et la transmission des instructions d'appel, puis pour autoriser la transmission d'instructions à partir du clavier (5) lorsque toute les instructions d'appel ont été reçues par le processeur (1).

Application à la transmission d'instructions à un processeur, à partir d'un clavier.

EP 0 181 816 A1

## DISPOSITIF DE SIMULATION ET DE SECURITE POUR CLAVIER DE SAISIE DE DONNEES

La présente invention concerne un dispositif de simulation et de sécurité pour un clavier de saisie de données d'un processeur. Elle s'applique à la transmission d'instructions à un processeur, à partir d'un clavier de saisie de données. Elle permet notamment d'empêcher que tout opérateur travaillant sur ce clavier utilise le processeur avec un programme différent du programme d'exécution à partir duquel ce processeur doit fonctionner.

On sait qu'un processeur fonctionne à partir d'un programme d'exécution enregistré dans une mémoire. Ce programme d'exécution ne peut être déroulé qu'après l'initialisation du processeur. Ce programme d'initialisation est généralement enregistré dans une mémoire morte (Mémoire ROM) et le programme d'exécution se déroule, lorsqu'après l'initialisation, des instructions d'appel, spécifiques du programme d'exécution considéré, sont transmises au processeur, grâce à un opérateur agissant sur le clavier de saisies de données de ce processeur. Le programme d'exécution qui est généralement contenu dans une mémoire vive, ne peut donc se dérouler que si les instructions d'appel de ce programme ont été correctement fournies par le clavier. Si un opérateur transmet des instructions différentes de celles qui sont nécessaires au déroulement du programme d'exécution, cet opérateur peut alors travailler sur un programme différent du programme d'exécution à partir duquel il était prévu que l'opérateur travaille. Ceci arrive fréquemment, notamment lorsque des processeurs sont destinés à l'enseignement. Il est souvent courant en effet que dans ce type d'application, les étudiants introduisent, après initialisation, des instructions qui ne correspondent pas du tout aux instructions d'appel du programme d'exécution ; ces étudiants travaillent alors sur un programme de leur choix qui ne correspond pas du tout au programme d'exécution prévu pour l'enseignement souhaité.

L'invention a pour but de remédier à ces inconvénients et notamment de prévoir un dispositif de simulation et de sécurité pour clavier de saisie de données, ce dispositif empêchant le fonctionnement d'un processeur à partir d'un programme différent du programme d'exécution à partir duquel ce processeur doit normalement fonctionner.

L'invention a pour objet un dispositif de simulation et de sécurité pour clavier de saisie de données d'un processeur, ce clavier comprenant des lignes et des colonnes et des touches de sélection, l'appui d'une touche sélectionnant une ligne et une colonne et permettant ainsi de transmettre une instruction codée correspondant au processeur, par l'intermédiaire d'une unité d'entrée-sortie reliée au processeur et aux lignes et colonnes, cette unité d'entrée-sortie fournissant des impulsions de balayage aux lignes du clavier, le processeur étant relié à au moins une mémoire contenant un programme d'initialisation et au moins une mémoire contenant un programme d'exécution qui est appelé, après l'initialisation, lorsqu'une série d'instructions codées d'appel ont été transmises au processeur par le clavier, caractérisé en ce qu'il comprend un ensemble de mémorisation contenant lesdites instructions codées d'appel et qui est relié à l'unité d'entrée-sortie, et un ensemble d'aiguillage relié à l'ensemble de mémorisation, aux colonnes du clavier et à l'unité d'entrée-sortie pour permettre la transmission des instructions d'appel vers le processeur, pour empêcher toute transmission d'instruction codées partir du clavier pendant l'initialisation et la transmission des instructions d'appel, puis pour autoriser la transmission des instructions à partir du clavier, lorsque toutes les instructions d'appel ont été reçues par le processeur.

Selon une autre caractéristique de l'invention, l'ensemble de mémorisation comprend une mémoire de commande contenant lesdites instructions d'appel ainsi que les adresses codées de ces instructions, un compteur d'adresses relié à cette mémoire de commande et à une sortie de commande d'un sélecteur d'impulsions pour recevoir des impulsions de commande d'adressage de la mémoire de commande, synchronisées avec les impulsions de balayage des lignes du clavier, les moyens d'aiguillage comprenant un circuit d'aiguillage relié par des entrées, à des moyens de lecture des instructions d'appel, eux-mêmes reliés à la mémoire de commande, à une sortie du compteur et aux colonnes du clavier, des sorties des moyens d'aiguillage étant reliées à des entrées de l'unité d'entrée-sortie, ces moyens d'aiguillage comprenant en outre un comparateur relié à des sorties de l'unité d'entrée-sortie, pour recevoir à chaque instant, un code de balayage des lignes du clavier, ce comparateur étant aussi relié des moyens de lecture des adresses codées des instructions d'appel, une sortie de ce comparateur étant reliée aux moyens de lecture des instructions d'appel pour commander le transfert des instructions d'appel vers les moyens d'aiguillage et vers l'unité d'entrée-sortie, lorsque le code de la ligne balayée correspond au code de l'adresse des instructions d'appel, les moyens d'aiguillage reliés au compteur bloquant tout transfert d'instructions provenant du clavier pendant l'initialisation et pendant le balayage des adresses de la mémoire de commande et des lignes du clavier.

Selon une autre caractéristique, le sélecteur d'impulsions comprend un circuit logique dont une entrée est reliée à une sortie de l'unité d'entrée-sortie pour recevoir des impulsions de commande d'adressage de la mémoire, provenant du processeur et dont une autre entrée est reliée à une sortie d'une horloge externe fournissant des impulsions de commande d'adressage de la mémoire, une sortie de ce sélecteur étant reliée à une entrée du compteur, deux entrées de commande de ce sélecteur étant reliées à un commutateur pour sélectionner les impulsions provenant de l'unité d'entrée-sortie ou de l'horloge externe, les impulsions de commande d'adressage étant synchronisées avec les impulsions de balayage des lignes du clavier.

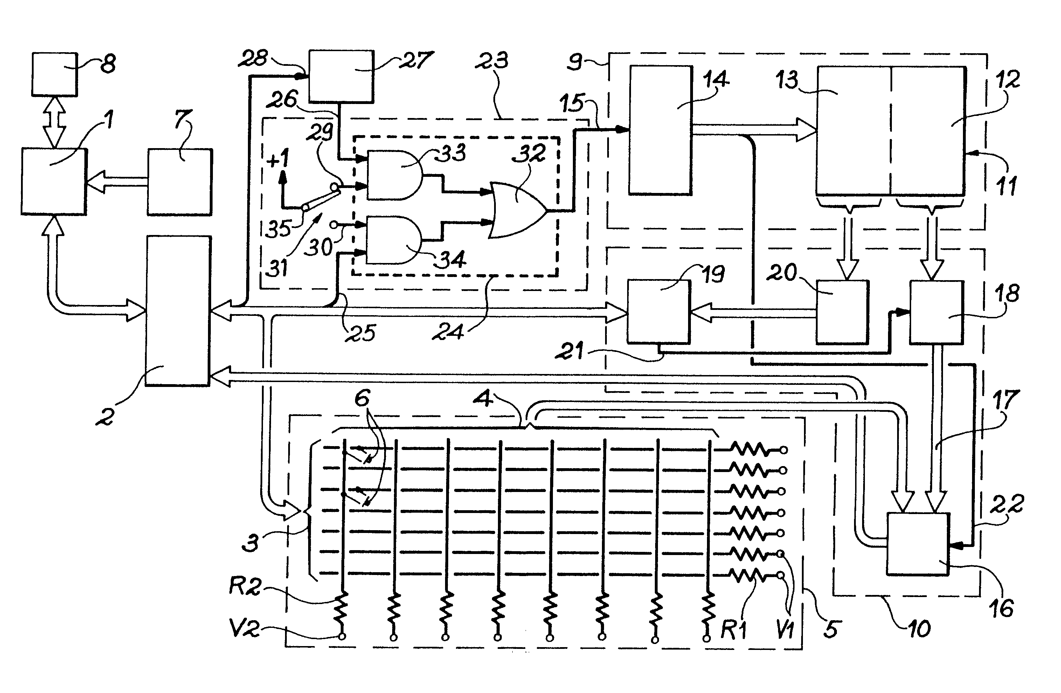

Le processeur 1 est relié à une unité d'entrée-sortie 2, elle-même reliée aux lignes 3 et aux colonnes 4, d'un clavier de saisie de données 5, comme on le verra plus loin en détail. Ce clavier comporte des touches d'appui 6 qui ne sont pas toutes représentées sur la figure. Les colonnes et les lignes du clavier sont portées en permanence à un niveau logique 1 par exemple, grâce à des tensions $+V_1$, $+V_2$, appliquées respectivement à ces lignes et ces colonnes, par l'intermédiaire de résistances $R_1$, $R_2$. Le processeur est aussi relié à une mémoire 7 à lecture seule (mémoire ROM) qui contient un programme d'initialisation, et à une mémoire 8 (une mémoire vive par exemple) qui contient un programme d'exécution ; ce programme ne peut être déroulé, comme indiqué plus haut, que s'il est appelé par des instructions déterminées, introduites par l'opérateur, à l'aide du clavier 5. Ce clavier fonctionne normalement de la façon suivante : toutes les lignes et toutes les colonnes sont à un niveau logique 1. Le microprocesseur, grâce à l'unité d'entrée-sortie 2 balaye périodiquement et successivement, les lignes 3 du clavier, en leur appliquant des impulsions de niveau logique 0. Lorsque l'opérateur souhaite envoyer une instruction vers le processeur 1, il appuie sur une touche 6 par exemple ; lorsque l'impulsion de balayage de niveau logique 0 est appliquée à la ligne correspondant à cette touche, une impulsion de niveau logique 0 apparaît aussi sur la colonne correspondante. Il en résulte que le processeur reçoit, par l'intermédiaire de l'unité d'entrée-sortie 2, un code correspondant à la ligne balayée et à colonne de la touche qui a été appuyée. C'est ainsi par exemple, que si le clavier comporte 8 lignes et 8 colonnes et que la touche appuyée correspond à la première ligne et à la deuxième colonne, le code transmis au processeur pour la première ligne est 01111111, tandis que le code correspondant à la deuxième colonne est 10111111. On voit donc qu'après l'initialisation du processeur, l'opérateur peut envoyer des instructions à ce processeur, par l'intermédiaire du clavier. Ces instructions doivent être normalement des instructions d'appel permettant le déroulement du programme d'exécution contenu dans la mémoire vive 8. Le dispositif de sécurité, qui va maintenant être décrit, permet d'empêcher l'envoi de n'importe quelles instructions vers le processeur, après l'initialisation de celui-ci ; il permet donc d'interdire à tout opérateur de travailler sur un autre programme que le programme d'exécution contenu dans la mémoire 8.

Le dispositif de sécurité comprend un ensemble de mémorisation 9 contenant des instructions codées d'appel du programme d'exécution. Cet ensemble de mémorisation est relié à l'unité d'entrée-sortie 2, ainsi qu'à un ensemble d'aiguillage 10 qui sera décrit plus loin en détail. Cet ensemble d'aiguillage est aussi relié aux lignes 3 et aux colonnes 4 du clavier 5, ainsi qu'à l'unité d'entrée-sortie 2. Il permet, comme on le verra plus loin, de transmettre des instructions d'appel du programme d'exécution, vers le processeur, par l'intermédiaire de l'unité d'entrée-sortie 2. Il permet également d'empêcher toute transmission d'instructions codées, à partir du clavier, pendant l'initialisation et la transmission des instructions d'appel contenues dans l'ensemble de mémorisation 9 ; il autorise ensuite la transmission d'instructions à partir du clavier, lorsque toutes les instructions d'appel ont été reçues par le processeur.

L'ensemble de mémorisation 9 comprend une mémoire de commande 11 (de type ROM par exemple). Cette mémoire comprend deux parties 12, 13 qui contiennent respectivement des instructions d'appel du programme d'exécution et les adresses de ces instructions. L'ensemble de mémorisation comprend aussi un compteur d'adresses 14 qui est relié à des entrées d'adressage de la mémoire de commande 11. Ce compteur est aussi relié à une sortie 15 de commande d'un sélecteur 23 d'impulsions de commande d'adressage. Il reçoit des impulsions de commande d'adressage de la mémoire 11, qui sont synchronisées avec les impulsions de balayage des lignes du clavier, appliquées à celui-ci par l'unité d'entrée-sortie 2.

Ce sélecteur 23 d'impulsions de commande d'adressage comprend un circuit logique 24 dont une entrée 25 est reliée à une sortie de l'unité d'entrée-sortie 2, pour recevoir des impulsions de commande d'adressage de la mémoire de commande 11, ces impulsions provenant du processeur 1. Le circuit logique 24 comprend une autre entrée 26 qui est reliée à une sortie d'une horloge externe 27, synchronisée sur une entrée 28, sur les impulsions de balayage des lignes du clavier. Deux entrées 29, 30 de ce circuit logique, sont reliées à un commutateur 31 qui permet de sélectionner les impulsions de commande d'adressage provenant soit du processeur 1, soit de l'horloge 27. Le circuit logique 24 comprend par exemple une porte OU32 dont la sortie constitue la sortie 15 du sélecteur et dont les entrées sont respectivement reliées aux sorties de deux portes ET33, 34. L'entrée 29 du sélecteur constitue l'une des entrées de la porte 33 tandis que l'entrée 30 du sélecteur constitue l'une des entrées de la porte 34. L'autre entrée de la porte 33 constitue l'entrée 26 du sélecteur, reliée à l'horloge 27 et l'autre entrée de la porte 34 constitue l'entrée 25 du sélecteur, reliée à l'unité d'entrée sortie 2. La sélection des impulsions de commande provenant du processeur 1 ou de l'horloge 27, est effectuée par le basculement du commutateur 31 vers l'entrée 29 ou vers l'entrée 30, la borne commune 35 du commutateur étant portée à un niveau logique 1. Ce sélecteur permet à tout moment d'interrompre la transmission d'instructions par le clavier pour faire parvenir au processeur des instructions d'appel contenues dans la mémoire 11. Ceci est notamment obtenu en plaçant le commutateur 31 dans la position 29.

Les moyens d'aiguillage 10 comprennent un circuit d'aiguillage 16 relié par des entrées 17, à des moyens de lecture 18 des instructions d'appel contenues dans la première partie 12 de la mémoire de commande 11. Les moyens de lecture 18 des instructions d'appel, sont eux-mêmes reliés à cette mémoire. Ces moyens d'aiguillage 16 sont aussi reliés à une sortie du compteur 14 pour recevoir, comme on le verra plus loin en détail, une impulsion de commande d'aiguillage. Les moyens d'aiguillage sont aussi reliés aux colonnes 4 du clavier 5 et ils comprennent aussi un comparateur 19 qui est relié à des sorties de l'unité d'entrée-sortie 2, et à des sorties de moyens de lecture d'adresses 20 ; ces moyens de lecture sont eux-mêmes reliés à des sorties de la deuxième partie 13 de la mémoire de commande 11. Une sortie de ce comparateur est reliée à une entrée de commande des moyens de lecture 18, des instructions d'appel contenues dans la mémoire 11.

Le dispositif qui vient d'être décrit fonctionne de la manière suivante, lorsque le commutateur 31 est dans la position 30 : pendant la phase d'initialisation du processeur, le balayage du clavier n'ayant pas commencé, le compteur 14 est bloqué ; le circuit d'aiguillage reçoit sur son entrée de commande 21, un signal empêchant tout transfert d'instructions provenant du clavier 5, vers l'unité d'entrée-sortie 2. Pendant toute cette phase d'initialisation du processeur, l'unité d'entrée-sortie n'applique aucune impulsion de balayage sur les lignes du clavier. A la fin de cette période d'initialisation, le processeur 1 applique, par l'intermédiaire de l'unité d'entrée-sortie 2, des impulsions de balayage des lignes 3 du clavier 5. Des impulsions synchrones de ces impulsions de balayage sont alors appliquées simultanément au compteur 14. Le signal appliqué sur l'entrée de commande 21 du circuit d'aiguillage 16 continue à bloquer le transfert d'instructions en provenance du clavier, vers l'unité d'entrée-sortie 2. Les sorties du compteur 14 permettent d'adresser la deuxième partie 13 de la mémoire 11 qui contient, sous forme codée, les adresses des instructions d'appel du programme d'exécution. Le comparateur 19 permet au cours du balayage des lignes du clavier de comparer le code correspondant à la ligne balayée avec le code de l'adresse de la mémoire 9 également balayée par le compteur 14. Si ces deux codes sont identiques, le comparateur fournit alors sur une sortie 21 une impulsion de commande des moyens de lecture 18 des instructions codées d'appel du programme d'exécution. Ces instructions sont alors transférées grâce à ces moyens de lecture 18 depuis la première partie de la mémoire de commande 11, vers les moyens d'aiguillage 16 qui les transmettent ensuite à l'unité d'entrée-sortie 2. Lorsque toutes les lignes du clavier et toutes les adresses d'instruction d'appel enregistrées dans la mémoire 11 ont été balayées, le compteur 14 est remis à zéro, par des moyens connus dans l'état de la technique et qui ne sont pas décrits ici en détail. L'entrée de commande 22 des moyens d'aiguillage 16, reçoit alors un signal de commande autorisant le transfert d'instructions en provenance du clavier 5. Une séquence différente d'instructions d'appel peut à tout moment être envoyée au processeur, en plaçant le commutateur 31 dans la position 29.

Le dispositif qui vient d'être décrit permet bien de bloquer tout transfert d'instructions provenant du clavier à tout instant et notamment pendant l'initialisation et pendant le balayage des lignes du clavier et des adresses de la mémoire de commande ; il autorise ensuite tout transfert d'instructions provenant du clavier, après l'initialisation et le balayage du clavier ou en dehors de tout nouveau transfert d'instructions d'appel pouvant survenir lorsque le commutateur 31 est dans la position 29. Le commutateur 31 permet notamment d'appeler un autre programme d'exécution.

## Revendications

1. Dispositif de simulation et de sécurité pour clavier (5) de saisies de données d'un processeur (1), ce clavier comprenant des lignes (3) et des colonnes (4) et des touches (6) de sélection, l'appui d'une touche sélectionnant une ligne et une colonne et permettant ainsi de transmettre une instruction codée correspondant au processeur, par l'intermédiaire d'une unité d'entrée-sortie (2) reliée au processeur (1) et aux lignes et colonnes, cette unité d'entrée-sortie fournissant des impulsions de balayage aux lignes du clavier, le processeur étant relié à au moins une mémoire (7) contenant un programme d'initialisation et au moins une mémoire (8) contenant un programme d'exécution qui est appliqué après l'initialisation, lorsqu'une série d'instructions codées d'appel ont été transmises au processeur (1) par le clavier (5), caractérisé en ce qu'il comprend un ensemble de mémorisation (9) contenant lesdites instructions codées d'appel et relié à l'unité d'entrée-sortie (2), et un ensemble d'aiguillage (10) relié à l'ensemble de mémorisation (9), aux colonnes (4) du clavier et à l'unité d'entrée-sortie (2) pour permettre la transmission des instructions d'appel vers le processeur (1), pour empêcher toute transmission d'instructions codées à partir du clavier (5) pendant l'initialisation et la transmission des instructions d'appel, puis pour autoriser la transmission d'instructions à partir du clavier (5) lorsque toute les instructions d'appel ont été reçues par le processeur (1).

2. Dispositif selon la revendication 1, caractérisé en ce que l'ensemble de mémorisation (9) comprend une mémoire de commande (11) contenant lesdites instructions d'appel ainsi que les adresses codées de ces instructions, un compteur d'adresses (14) relié à cette mémoire de commande (11) et à une sortie de commande d'un sélecteur d'impulsions pour recevoir des impulsions de commande d'adressage de la mémoire de commande (11) synchronisées avec les impulsions de balayage des lignes (3) du clavier (5), les moyens d'aiguillage (10) comprenant un circuit d'aiguillage (16) relié par des entrées, à des moyens de lecture (18) des instructions d'appel eux-mêmes reliés à la mémoire de commande (11), à une sortie du compteur (14) et aux colonnes (4) du clavier, des sorties des moyens d'aiguillage (16) étant reliées à des entrées de l'unité d'entrée-sortie (2), ces moyens d'aiguillage (16) comprenant en outre un comparateur (19) relié à des sorties de l'unité d'entrée-sortie (2) pour recevoir à chaque instant un code de balayage des lignes (3) du clavier, ce comparateur (19) étant aussi relié à des moyens (20) de lecture des adresses codées des instructions d'appel, une sortie (21) de ce comparateur étant reliée aux moyens (18) de lecture des instructions d'appel pour commander le transfert des instructions d'appel vers les moyens d'aiguillage (16) et vers l'unité d'entrée-sortie (2), lorsque le code de la ligne balayée correspond au code de l'adresse des instructions d'appel, les moyens d'aiguillage (16) reliés au compteur (14) bloquant tout transfert d'instructions provenant du clavier (5) pendant l'initialisation et pendant le balayage des adresses de la mémoire de commande (11) et des lignes (3) du clavier (5).

3. Dispositif selon la revendication 2, caractérisé en ce que le sélecteur d'impulsions (23) comprend un circuit logique (24) dont une entrée est reliée à une sortie de l'unité d'entrée-sortie (2) pour recevoir des impulsions de commande d'adressage de la mémoire de commande (11), provenant du processeur (1), et dont une autre entrée est reliée à une sortie d'une horloge externe (27) fournissant des impulsions de commande d'adressage de la mémoire de commande (11), une sortie (15) de ce sélecteur étant reliée à une entrée du compteur (14), deux entrées de commande de ce sélecteur étant reliées à un commutateur (31) pour sélectionner les impulsions provenant de l'unité d'entrée-sortie (2) ou de l'horloge externe (27), les impulsions de commande d'adressage étant synchronisées avec les impulsions de balayage des lignes du clavier (5).

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | US-A-3 924 110 (M.J. COCHRAN et al.)<br>* Colonne 2, lignes 33-54; colonne 2, lignes 1-26; colonne 21, lignes 52-62; colonne 22, lignes 9-30 * | 1,2 | G 06 F 9/44 |
| | --- | | |
| A | PATENTS ABSTRACTS OF JAPAN, vol. 8, no. 151 (P-286) [1588], 13 juillet 1984, page 157 P 286; & JP - A - 59 49 641 (FUJITSU K.K.) 22-03-1984 | 1,2 | |
| | ----- | | |

DOMAINES TECHNIQUES
RECHERCHES (Int. Cl.4)

G 06 F 9/44

Le present rapport de recherche a été établi pour toutes les revendications

| Lieu de la recherche | Date d'achèvement de la recherche | Examinateur |
|---|---|---|
| LA HAYE | 13-02-1986 | DAVIES H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82